# EUROPÄISCHE PATENTSCHRIFT

(11) **EP 3 599 320 B1**
(45) Veröffentlichungstag und Bekanntmachung des Hinweises auf die Patenterteilung: **30.08.2023**
(21) Anmeldenummer: 18186149.3
(22) Anmeldetag: 27.07.2018
(51) Int. Cl.: E04C 5/07, E04C 5/03

(54) **BEWEHRUNGSKÖRPER UND VERFAHREN ZU DESSEN HERSTELLUNG**
REINFORCING BAR AND METHOD FOR ITS PRODUCTION
BARRE D'ARMATURE ET SON PROCÉDÉ DE FABRICATION

(43) Veröffentlichungstag der Anmeldung: 29.01.2020
(73) Patentinhaber: Solidian GmbH, 72458 Albstadt (DE)
(72) Erfinder: Hinzen, Marcus, Dr., 72458 Albstadt (DE)
(74) Vertreter: Rüger Abel Patentanwälte PartGmbB

(56) Entgegenhaltungen:
- EP-A- 0 199 348
- EP-A1- 2 857 607
- EP-A1- 3 572 594
- DE-A1- 1 936 078
- US-A- 5 727 357

## Beschreibung

Die Erfindung betrifft einen Bewehrungskörper zur Bewehrung eines Baustoffkörpers, beispielsweise eines Betonkörpers. Der Bewehrungskörper hat wenigstens einen Bewehrungsstab, der eine Matrix mit darin eingebetteten Fasern aufweist. Der Bewehrungskörper bildet somit eine Faserbewehrung und kann als Faserbewehrungskörper bezeichnet werden.

Solche Faserbewehrungskörper sind bekannt. Won et al., "Durability of hybrid FRB reinforcing bars in concrete structures exposed to marine environments", Int. J. Structural Engineering, Volume 4, Nos. 1/2, 2013, Seiten 63 fortfolgende offenbart einen Bewehrungsstab mit unterschiedlichen Zusammensetzungen verschiedener Fasern. Dabei können Fasern aus E-Glas, Aramid und Karbon in unterschiedlichen Anteilen in einem sogenannten Hybrid-Bewehrungsstab vorhanden sein. Am Außenumfang kann eine unebene Struktur oder Rippenstruktur vorhanden sein, um den Bewehrungsstab in der Baustoffmatrix des Baustoffkörpers besser verankern zu können.

Ko et al., "Ductile Hybrid Fiber Reinforced Plastic Reinforcing Bar for Concrete Structures: Design Methodology", ACI Materials Journal, November-December 1998, Seiten 655 fortfolgende offenbart ebenfalls einen Hybrid-Bewehrungsstab mit geflochtenen Fasern. Durch das Flechten von Fasern aus unterschiedlichem Material sollen die mechanischen Eigenschaften entsprechend der Faseranteile eingestellt werden. Ein ähnlicher Bewehrungskörper ist auch bekannt aus Xu et al. "Analysis of Hybrid Effect of Two Hybrid Fiber CGFRP Bar and Ist Mechanical Properties", Applied Mechanics and Materials, ISSN: 1662-7482, Vols. 166-169, Seiten 680-683, Trans Tech Publications, 2012.

Park beschreibt in "Effect of the Volume Fraction of Jute Fiber on the Interlaminar Shear Stress and Tensile Behavior Characteristics of Hybrid Glass/Jute Fiber Reinforced Polymer Composite Bar for Concrete Structures", International Journal of Polymer Science, Volume 2016, Article ID 3042392, Hindawi Publishing Corporation, einen Bewehrungsstab aufweisend unterschiedliche Anteile von Jutefasern und Glasfasern. Die Fasern sind in eine Matrix aus Vinylester eingebettet. Durch die unterschiedlichen Anteile der Fasermaterialien sollen die mechanischen Eigenschaften, insbesondere Duktilität und die interlaminare Scherfestigkeit eingestellt werden.

DE 19 36 078 A1 beschreibt einen Bewehrungsstab für eine Betonkonstruktion. Der Bewehrungsstab reißt einen in Kunstharz eingebetteten Glasseidenstrang auf. Auf der Mantelfläche des Bewehrungsstabes ist eine schräg zur Längsachse verlaufende Profilierung vorhanden. Diese Profilierung wird durch eine spiralförmige Umwicklung erzeugt, um Rippen und dazwischenliegende Rillen zu bilden. Die Umwicklung kann ein Metalldraht oder Band oder ebenfalls ein Faserstrang aus Glas sein, der mit Kunstharz getränkt ist.

WO 2017/211904 A1 offenbart ein Verfahren zum Herstellen eines profilierten faserverstärkten Kunststoffprofils. Dort werden erste Verstärkungsfasern zur Bildung eines Kunststoffgrundkörpers in eine Kunststoffmatrix eingebettet. Die ersten Verstärkungsfasern sind Endlosfasern. Zweite Fasern werden anschließend bereichsweise auf den Kunststoffgrundkörper aufgebracht. Anschließend wird der Kunststoffgrundkörper profiliert bzw. umgeformt. Die zweiten Verstärkungsfasern sind verglichen mit den ersten Verstärkungsfasern deutlich kürzer und haben eine Länge von 0,1 mm bis 1 mm.

WO 96/16792 A1 beschreibt ein Verfahren, bei dem ein profilierter Bewehrungsstab aus einem Kern mit einem eingebetteten ersten Faserstrang hergestellt wird. In einer Form wird das Matrixmaterial des Kerns umgeformt und mit einer Profilierung versehen. Durch Einspritzen von Kunststoffmaterial in die Form kann an einem Abschnitt ein Gewinde hergestellt werden. Ein ähnliches Verfahren ist auch in WO 93/08976 A1 beschrieben.

US 5 727 357 A beschreibt einen Bewehrungsstab mit einem Kern und einer Ummantelung. In dem Kern sind erste Fasern und im Mantel zweite Fasern angeordnet. Die zweiten Fasern sind zum Schutz des Kerns vorzugsweise in einem Mantel angeordnet, der den Kern umschließt und können beispielsweise miteinander verwoben sein.

EP 2 857 607 A1 zeigt einen Bewehrungsstab mit einem Kern und Rippen aus faserverstärktem Material. Die Fasern im Kern und in den Rippen können aus unterschiedlichen Fasermaterialien sein. Die Rippen können durch dazwischenliegende Vertiefungen axial voneinander beabstandet sein.

Aus der nicht vorveröffentlichten EP 3 572 594 A1 ist ein Bewehrungsstab bekannt, der bei einem Ausführungsbeispiel einen Kern, einen den Kern vollständig umschließenden Mantel sowie eine auf dem Mantel angeordnete Rippenstruktur aufweisen kann. Der Kern, der Mantel und die Rippenstruktur sind jeweils aus faserverstärkten Kunststoffmaterialien gebildet. Wesentlich ist dabei, dass der Mantel den Kern vollständig umgibt, um einen unmittelbaren Kontakt zwischen einem Baustoff eines Baustoffkörpers und den Fasern im Kern zu vermeiden. Dadurch werden die Fasern im Kern vor chemischen Einwirkungen abgeschirmt.

Im Vergleich zu Bewehrungskörpern aus Metall, insbesondere Stahl, sind Faserbewehrungskörper im Hinblick auf ihr geringeres Gewicht vorteilhaft, jedoch auch mit höheren Kosten verbunden. Deswegen haben sich Faserbewehrungen im Markt nur für wenige Anwendungen durchgesetzt.

Es kann daher als Aufgabe der Erfindung angesehen werden, einen Bewehrungskörper zu schaffen, bei dem eine gute Verbindung zwischen dem Bewehrungskörper und dem Baustoffkörper erreicht wird und der sich wirtschaftlich herstellen lässt.

Diese Aufgabe wird durch einen Bewehrungskörper mit den Merkmalen des Patentanspruches 1 sowie ein Verfahren mit den Merkmalen des Patentanspruches 9 geschaffen.

Der erfindungsgemäße Bewehrungskörper weist wenigstens einen sich in Axialrichtung entlang einer Längsmittelachse erstreckenden Bewehrungsstab auf. Der Bewehrungsstab kann sich geradlinig entlang der Längsmittelachse erstrecken oder einen oder mehrere Knickstellen haben. Die Axialrichtung ist an jeder Stelle jeweils parallel zur Längsmittelachse ausgerichtet. Der Bewehrungsstab hat einen Kern und eine an einer Umfangsfläche des Kerns angeordnete Rippenstruktur. Die Rippenstruktur kann eine oder mehrere Rippen aufweisen. Sind mehrere Rippen vorhanden, sind die einzelnen Rippen in Axialrichtung mit Abstand zu benachbarten Rippen angeordnet. Eine einzige Rippe kann sich beispielsweise schraubenförmig um die Längsmittelachse winden.

Aus einem oder mehreren Bewehrungsstäben kann ein Bewehrungskörper hergestellt werden. Durch eine Formgebung und Anordnung des wenigstens einen Bewehrungsstabes lassen sich im Prinzip beliebige zweidimensionale oder dreidimensionale Bewehrungskörper bilden.

Jeder Bewehrungsstab hat einen Kern mit wenigstens einem in eine Kernmatrix eingebetteten ersten Faserstrang aus ersten Fasern. Der erste Faserstrang ist ein Endlosfaserstrang, insbesondere ein Roving.

Die Rippenstruktur weist wenigstens eine Rippe und wenigstens eine Vertiefung auf. Die wenigstens eine Vertiefung erstreckt sich ringförmig in Umfangsrichtung um die Längsmittelachse und/oder schraubenförmig um die Längsmittelachse.

Die Rippenstruktur weist wenigstens einen zweiten Faserstrang aus zweiten Fasern auf, der in eine Rippenmatrix eingebettet ist und der durch die wenigstens eine Vertiefung in zumindest zwei Faserstrangabschnitte unterteilt ist. Die zweiten Fasern bestehen aus einem Fasermaterial, das sich vom Fasermaterial der ersten Fasern unterscheidet. Die Faserstrangabschnitte sind durch Trennen des zweiten Faserstrangs gebildet. Der zweite Faserstrang ist im Ausgangszustand ein Endlosfaserstrang, beispielsweise ein Roving.

In Axialrichtung unmittelbar benachbarte Faserstrangabschnitte des zweiten Faserstrangs sind durch die wenigstens eine Vertiefung voneinander getrennt. Jeder Faserstrangabschnitt erstreckt sich in Axialrichtung innerhalb einer Rippe oder einem Rippenteil der wenigstens einen Rippe. Sind mehrere in Axialrichtung mit Abstand zueinander angeordnete Rippen vorhanden, weist jede Rippe einen Faserstrangabschnitt des zweiten Faserstrangs auf. Weist der Bewehrungsstab beispielsweise eine schraubenförmige Rippe auf, sind die einzelnen Windungen in Axialrichtung voneinander beabstandet. An jeder Betrachtungsstelle in Umfangsrichtung um die Längsmittelachse fluchten die zweiten Faserstrangabschnitte in den unmittelbar benachbarten Rippenteilen in Axialrichtung. Die Ausgestaltung der wenigstens einen Rippe und/oder der wenigstens einen Vertiefung der Rippenstruktur kann abhängig von der Gestalt des Bewehrungsstabes variieren. Bei allen Ausführungsbeispielen sind die Faserstrangabschnitte des zweiten Faserstrangs in Axialrichtung orientiert.

Die wenigstens eine Rippe der Rippenstruktur dient dazu, den Bewehrungsstab entlang seiner Erstreckung in einer Baustoffmatrix eines Baustoffkörpers zu verankern. Dadurch wird vermieden, dass sich der Bewehrungsstab beim Aufnehmen von auf dem Baustoffkörper einwirkenden Zugkräften relativ zur Baustoffmatrix des Baustoffkörpers bewegt und sich von der Baustoffmatrix trennt. Durch die Verankerung lassen sich Zugkräfte, die auf den Baustoffkörper einwirken, durch den Bewehrungsstab aufnehmen. Hierfür dient beim erfindungsgemäßen Bewehrungskörper der Kern des Bewehrungsstabs mit den ersten Fasern.

Die Rippenstruktur mit der wenigstens einen Rippe und mit der wenigstens einen Vertiefung ist nicht zur Aufnahme von Zugkräften eingerichtet, sondern zum Verankern des Bewehrungsstabs in der Baustoffmatrix des Baustoffkörpers. Deswegen können dort zweite Fasern aus einem anderen Fasermaterial verwendet werden, deren Eigenschaften nicht im Hinblick auf das Aufnehmen von Zugkräften gewählt werden müssen. Insbesondere kann das Fasermaterial der zweiten Fasern kostengünstiger sein als das Fasermaterial der ersten Fasern. Beispielsweise sind die zweiten Fasern weniger alkalibeständig und/oder weniger zugfest als die ersten Fasern.

Durch das Anordnen unterschiedlicher Fasermaterialien im Kern und in der Rippenstruktur kann ein insgesamt kostengünstiger Aufbau des Bewehrungskörpers erreicht werden, der dennoch eine gute Verankerung in der Baustoffmatrix bereitstellt und durch seinen Kern die erforderliche Zugfestigkeit aufweist.

Der erste Faserstrang und der zweite Faserstrang bzw. die Faserstrangabschnitte des zweiten Faserstrangs sind an jeder Stelle des Bewehrungsstabes im Wesentlichen parallel zueinander in Axialrichtung ausgerichtet, zumindest in geradlinig verlaufenden Abschnitten des Bewehrungsstabs. Während der Herstellung des Bewehrungsstabes wird zur Herstellung der Rippenstruktur Material am Umfang entfernt, wodurch der ursprünglich durchgängige wenigstens eine zweite Faserstrang aufgetrennt wird. In der wenigstens einen verbleibenden Rippe ist dann jeweils ein zweiter Faserstrangabschnitt vorhanden.

Die Faserstrangabschnitte erstrecken sich in Axialrichtung insbesondere vollständig durch eine Rippe und/oder einen Rippelteil oder Rippenabschnitt hindurch, der durch die wenigstens eine Vertiefung begrenzt ist. Jeder Faserstrangabschnitt hat zwei axiale Enden, die jeweils in einer axialen Endfläche der Rippe bzw. des Rippelteils oder Rippenabschnitts enden.

Der wenigstens eine erste Faserstrang und die Faserstrangabschnitte des wenigstens einen zweiten Faserstrangs sind vorzugsweise unter einer axialen Vorspannung im Bewehrungsstab angeordnet. Der Betrag dieser axialen Vorspannung kann variieren und kann beispielsweise im Rahmen der Herstellung eines Bewehrungsstabrohlings während eines Pultrusionsverfahrens oder eines anderen geeigneten Herstellungsverfahrens eingestellt werden, indem die Faserstränge unter einer Zugspannung axial möglichst gestreckt in die jeweilige Matrix eingebettet werden.

Ein Bewehrungsstabrohling lässt sich sehr einfach herstellen, beispielsweise in einem Pultrusionsverfahren, bei dem auf den Kern eine Mantelschicht mit dem in die Rippenmatrix eingebetteten wenigstens einen zweiten Faserstrang aufgebracht werden kann. In diesen Bewehrungsstabrohling kann dann durch Materialabtrag die wenigstens eine Vertiefung eingebracht werden, so dass die Rippenstruktur entsteht. Der Kern und insbesondere der erste Faserstrang bleiben dabei vorzugsweise unbeeinträchtigt. Unabhängig davon, welche Form die wenigstens eine Rippe bzw. die wenigstens eine Vertiefung der Rippenstruktur aufweist, kann jeweils derselbe Bewehrungsstabrohling verwendet werden. Dadurch, dass in der Mantelschicht der wenigstens eine zweite Faserstrang vorhanden ist, lässt sich der Bewehrungsstab im Pultrusionsprozess gut kompaktieren und es kann überschüssiges Matrixmaterial aus dem Kern bzw. der Mantelschicht entfernt werden. Es entsteht so ein kompakter Bewehrungsstab, der hohe Zugkräfte aufnehmen kann.

Das Entfernen von überschüssigem Matrixmaterial umfasst beispielsweise das radiale Zusammendrücken der Faserstränge, um überschüssiges Matrixmaterial aus dem Faserverbund des wenigstens einen ersten Faserstrangs und des wenigstens einen zweiten Faserstrangs zu herauszudrücken. Dadurch entsteht ein kompakter Faserverbund mit hoher Zugfestigkeit. Auch der Zusammenhalt zwischen dem wenigstens einen ersten Faserstrang und dem wenigstens einen zweiten Faserstrang kann dadurch verbessert werden.

Die ersten Fasern erstrecken sich vorzugsweise im Wesentlichen parallel zu einer Längsmittelachse des Bewehrungsstabs, zumindest in geradlinig verlaufenden Abschnitten des Bewehrungsstabs. Unter im Wesentlichen parallel ist dabei eine möglichst gestreckte Ausrichtung entlang der Längsmittelachse zu verstehen, wobei technisch nicht vermeidbare Biegungen oder Ondulationen auftreten können. Weist der Bewehrungsstab eine Biege- oder Knickstelle auf, können an den Biege- oder Knickstellen Abweichungen zwischen der Ausrichtung der ersten Fasern und der Längsmittelachse auftreten, da der Biege- oder Knickradius radial innen kleiner ist als radial außen.

Es ist bevorzugt, wenn weder die ersten Fasern, noch die zweiten Fasern verwoben sind. Vorzugsweise erstrecken sich die zweiten Fasern parallel zu den ersten Fasern. Die zweiten Fasern können zumindest in geradlinig verlaufenden Abschnitten des Bewehrungsstabs gestreckt und im Wesentlichen parallel zu einer Längsmittelachse des Bewehrungsstabs ausgerichtet sein. Analog zu der Orientierung der ersten Fasern kann es im Bereich von Knick- oder Biegestellen zu Abweichungen von dieser bevorzugten Ausrichtung kommen.

Die Rippenstruktur weist wenigstens eine Rippe und wenigstens eine Vertiefung auf. Diese Vertiefung ist vorzugsweise vollständig außerhalb des Kerns angeordnet. Rechtwinklig oder radial zur Erstreckungsrichtung des Bewehrungsstabes kann die Vertiefung eine Tiefe von zumindest 0,5 mm oder zumindest 2-3 mm aufweisen. Die Tiefe der Vertiefung kann beispielsweise zumindest 10% oder 15% oder 20% des Durchmessers des Kerns des Bewehrungsstabs betragen.

In Axialrichtung des Bewehrungsstabs bzw. parallel zur Längsmittelachse des Bewehrungsstabs hat die wenigstens eine Rippe eine Breite von mindestens 1 mm oder mindestens 2 mm oder mindestens 5 mm und/oder kann eine maximale Breite von 20 mm oder 15 mm oder 10 mm aufweisen. Diese Werte betreffen insbesondere eine Ausgestaltung des Bewehrungsstabs oder Bewehrungsstabes, bei dem die Rippenstruktur durch Materialabtrag zur Bildung von wenigstens einer Vertiefung hergestellt wurde.

Vorzugsweise hat das Fasermaterial der ersten Fasern eine höhere Zugfestigkeit als das Fasermaterial der zweiten Fasern. Beispielsweise können die ersten Fasern Karbon enthalten oder aus Karbon bestehen. Die ersten Fasern können auch AR-Glas aufweisen oder aus AR-Glas bestehen. Bei einer vorteilhaften Ausführungsform enthalten die zweiten Fasern Glas oder bestehen aus Glas. Als Glas für die zweiten Fasern kann zum Beispiel E-Glas, ECR-Glas oder AR-Glas verwendet werden. Die zweiten Fasern können zusätzlich oder alternativ auch Basalt oder ein Polymer, wie z.B. Polypropylen, enthalten oder aus Basalt oder einem Polymer, z.B. Polypropylen, bestehen.

Der Volumenanteil der ersten Fasern im Kern beträgt 40% bis 90% des gesamten Volumenanteils sämtlicher Fasern. Bei einer bevorzugten Ausführungsform ist der Volumenanteil der ersten Fasern größer als der Volumenanteil der zweiten Fasern. Da bei Bewehrungselementen die Rippentiefe oft in geringerem Maße zunimmt als deren Durchmesser, nimmt der Volumenanteil der ersten Fasern bei Bewehrungselementen (Bewehrungsstäben) mit größeren Durchmessern (von z.B. 30 mm) meistens einen höheren Wert an als bei Bewehrungselementen (Bewehrungsstaben) mit kleineren Durchmessern (von z.B. 6 mm).

Vorzugsweise ist der Bewehrungsstab vollständig frei von metallischen Materialien.

Als Matrixmaterial für die Kernmatrix und/oder die Rippenmatrix kann beispielsweise Epoxidharz, Vinylester, Polyurethan, Polyethylen, Polystyrol, ein Polysiloxan oder Acrylat verwendet werden. Die Kernmatrix und die Rippenmatrix können jeweils aus einem einheitlichen Matrixmaterial bestehen. Das Matrixmaterial für die Kernmatrix und die Rippenmatrix kann gleich sein. Es ist auch vorteilhaft, für die Kernmatrix ein erstes Matrixmaterial und für die Rippenmatrix ein sich davon unterscheidendes zweites Matrixmaterial zu verwenden.

Ein beliebiges Ausführungsbeispiel eines Bewehrungskörpers, insbesondere eines vorstehend beschriebenen Bewehrungskörpers, kann durch ein erfindungsgemäßes Verfahren wie folgt hergestellt werden:

Zunächst wird ein Bewehrungsstabrohling hergestellt, beispielsweise mittels eines Pultrusionsverfahrens. Der Bewehrungsstabrohling hat einen Kern sowie eine Mantelschicht, die an einer Umfangsfläche des Kerns anliegt und den Kern an der Umfangsfläche vollständig umschließt. Der Kern weist wenigstens einen in eine Kernmatrix eingebetteten ersten Faserstrang aus ersten Fasern auf. Die Mantelschicht weist wenigstens einen in eine Matrix der Mantelschicht eingebetteten zweiten Faserstrang aus zweiten Fasern auf. Die zweiten Fasern bestehen aus einem Fasermaterial auf, das sich vom Fasermaterial der ersten Fasern unterscheidet. Der Kern und die Mantelschicht können gemeinsam in einem Herstellungsverfahren, insbesondere in einem Pultrusionsverfahren, oder zeitlich nacheinander, beispielsweise in jeweils einem Pultrusionsverfahrensschritt, hergestellt werden.

Nach dem Herstellen des Bewehrungsstabs mit dem Kern und der Mantelschicht wird die Rippenstruktur in der Mantelschicht erzeugt. Hierzu wird wenigstens eine Vertiefung in die Mantelschicht eingebracht, beispielsweise durch ein Abtragsverfahren mittels eines spanabhebenden Werkzeugs, mittels eines Lasers oder dergleichen. Durch das Einbringen der wenigstens einen Vertiefung bildet sich innerhalb der Mantelschicht die Rippenstruktur. Es werden mehrere ringförmige und insbesondere kreisringförmige Vertiefungen mit Abstand zueinander in die Mantelschicht und/oder wenigstens eine sich schraubenförmig in der Mantelschicht erstreckende Vertiefung eingebracht, wodurch wenigstens eine sich schraubenförmig erstreckende Rippe gebildet ist. Es kann auch wenigstens eine sich in Axialrichtung erstreckende Vertiefung eingebracht werden.

Die wenigstens eine Vertiefung hat vorzugsweise die Form einer Nut mit zwei sich gegenüberliegenden Seitenwänden oder Nutflanken, die mittels eines Bodens oder Nutgrunds miteinander verbunden sind. Die wenigstens eine Vertiefung ist bevorzugt vollständig außerhalb des Kerns angeordnet. Bevorzugt hat die Vertiefung eine Tiefe, die zumindest 50% der Dicke der Mantelfläche entspricht. Der Boden der Vertiefung bzw. der Nutgrund kann durch die Umfangsfläche des Kerns gebildet sein. Die Seitenwände der Vertiefung bzw. die Nutflanken sind durch das benachbart zur Vertiefung vorhandene Material der Mantelschicht gebildet. Es ist alternativ auch möglich, den Nutgrund innerhalb des Kerns anzuordnen, wobei die Eindringtiefe der Vertiefung in den Kern bevorzugt maximal 15% oder maximal 20% von der halben Querschnittsabmessung des Kerns, die bei einem kreisrunden Kern dem Radius entspricht, beträgt.

Beim Herstellen der wenigstens einen Vertiefung werden die zweiten Fasern in der Mantelschicht durchtrennt und im Bereich der Vertiefung entfernt. Dies ist unkritisch, weil die zweiten Fasern nicht zur Aufnahme von Zugkräften entlang des Bewehrungsstabs erforderlich sind. Die Zugkräfte werden durch die im Kern vorhandenen ersten Fasern aufgenommen.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:

Figuren 1-4 jeweils eine schematische Darstellung eines Ausführungsbeispiels eines Bewehrungskörpers in Form eines Bewehrungsstabes mit einem Bewehrungsstab,

Figur 5 einen Bewehrungsstabrohling im Querschnitt bei der Herstellung eines Bewehrungskörpers mit einem Kern und einer Mantelschicht, die eine Umfangsfläche des Kerns umschließt,

Figuren 6 und 7 jeweils einen auf Basis des Bewehrungsstabrohlings aus Figur 5 hergestellten Bewehrungsstab, wobei in die Mantelfläche wenigstens eine Nut oder Vertiefung eingebracht wurde,

Figuren 8 und 9 jeweils eine Querschnittsansicht durch ein Ausführungsbeispiel eines Bewehrungsstabs entsprechend der Schnittlinie Q-Q in Figur 6,

Figuren 10 und 11 unterschiedliche Stadien beim Herstellen eines Bewehrungskörpers gemäß einem beispielhaften, nicht erfindungsgemäßen Verfahren und

Figuren 12 bis 15 jeweils schematische Darstellungen von Ausführungsbeispielen von Baustoffkörpern mit jeweils einer Baustoffmatrix, in die ein Bewehrungskörper eingebettet ist.

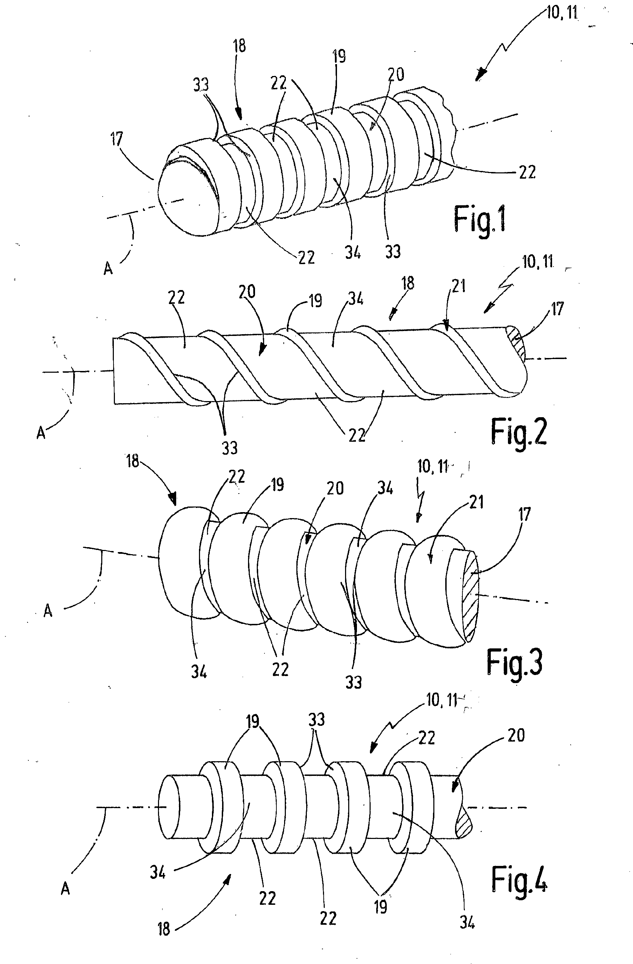

In den Figuren 1-4 sind schematisch unterschiedliche Ausführungsformen von Bewehrungskörpern 10 dargestellt, die jeweils als Bewehrungsstab 11 ausgeführt sind. Ein Bewehrungsstab 11 kann sich geradlinig entlang einer Längsmittelachse A erstrecken. Der Bewehrungsstab 11 kann in Abwandlung zu den dargestellten Ausführungsbeispielen auch eine oder mehrere Biegestellen oder Knickstellen aufweisen.

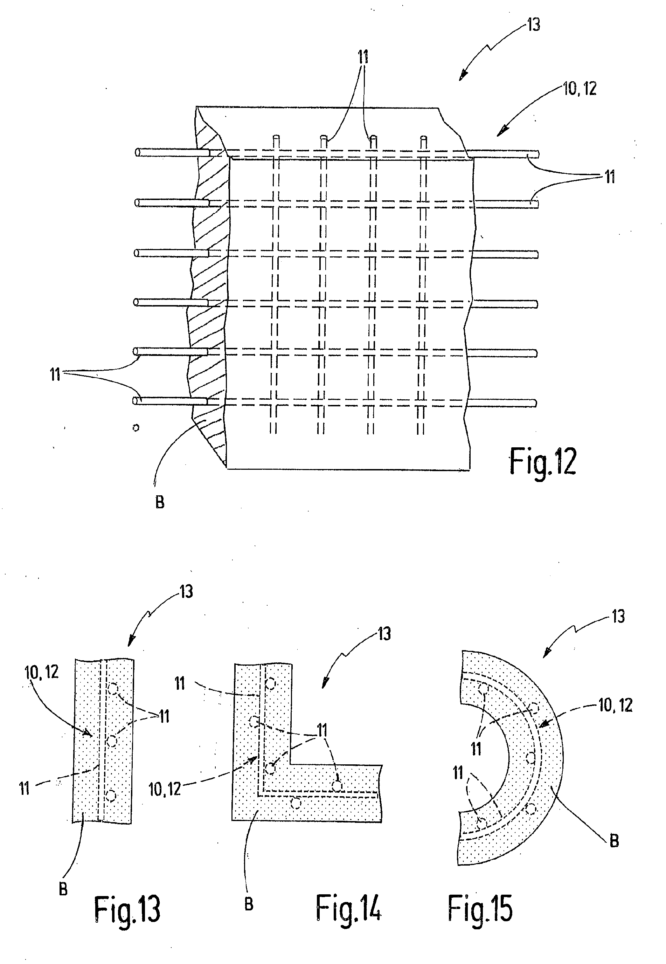

Im einfachsten Fall ist ein Bewehrungskörper 10 durch einen einzigen Bewehrungsstab 11 gebildet. Bei anderen Ausführungsbeispielen können mehrere Bewehrungsstäbe 11 einen Bewehrungskörper 10 bilden, beispielsweise ein Bewehrungsgitter 12 zur Bewehrung eines Baustoffkörpers 13 (Figuren 12-15). Der Baustoffkörper 13 weist eine Baustoffmatrix B aus Beton oder Mörtel auf. In die Baustoffmatrix B ist der Bewehrungskörper 10 bzw. das Bewehrungsgitter 12 eingebettet, um auf den Baustoffkörper 13 einwirkende Zugkräfte aufzunehmen. Das Bewehrungsgitter 12 kann sich dabei im Wesentlichen parallel zu einer Ebene erstrecken, wie es beispielhaft in Figuren 12 und 13 veranschaulicht ist. Alternativ dazu kann das Bewehrungsgitter 12 auch wenigstens eine Biege- oder Knickstelle aufweisen, was schematisch anhand der Figuren 14 und 15 veranschaulicht ist. Letztendlich kann mit Hilfe eines Bewehrungsstabes 11 oder mehrerer Bewehrungsstäbe 11 ein beliebiger zweidimensionaler oder dreidimensionaler Bewehrungskörper 10 gebildet werden, wie er zur Bewehrung des jeweiligen Baustoffkörpers 13 erforderlich oder geeignet ist.

Der Bewehrungskörper 10 weist demnach einen Bewehrungsstab 11 oder mehrere Bewehrungsstäbe 11 auf. Jeder Bewehrungsstab 11 hat einen Kern 17 und eine Rippenstruktur 18 mit wenigstens einer Rippe 19. Die wenigstens eine Rippe 19 ragt von einer Umfangsfläche 20 des Kerns 17 schräg oder rechtwinklig zur Längsmittelachse A nach außen weg. Die Querschnittsform der wenigstens einen Rippe 19 kann unterschiedlich ausgebildet werden. Bei den in den Figuren 1 und 4 gezeigten Ausführungsbeispielen hat die wenigstens eine Rippe 19 im Wesentlichen einen rechteckförmigen Querschnitt. Bei den in den Figuren 2 und 3 gezeigten Ausführungsbeispielen hat die wenigstens eine Rippe 19 mit Blick von außen auf den Bewehrungsstab 11 eine konvex gewölbte Rippenaußenfläche 21, die sich an die Umfangsfläche 20 anschließt.

Die wenigstens eine Rippe 19 kann sich schraubenförmig um die Längsmittelachse A entlang der Umfangsfläche 20 erstrecken (Figuren 1-3). Bei diesen Ausführungsbeispielen mit schraubenförmiger Rippe 19 ist beispielhaft jeweils eine einzige schraubenförmige Rippe 19 veranschaulicht. Bei anderen Ausführungsbeispielen können auch mehrere schraubenförmige Rippen 19 vorhanden sein, die sich kreuzungsfrei oder kreuzend entlang der Umfangsfläche 20 erstrecken.

In Figur 4 ist ein alternatives Ausführungsbeispiel mit ringförmig und zum Beispiel kreisringförmig ausgebildeten Rippen 19 veranschaulicht, die in Richtung parallel zur Längsmittelachse A mit Abstand zueinander angeordnet sind.

Zwischen zwei unmittelbar benachbart angeordneten Rippen 19 der Rippenstruktur 18 oder zwischen zwei unmittelbar benachbart angeordneten Rippenteilen oder Rippenabschnitten einer einzigen schraubenförmigen Rippe 19 ist jeweils eine nutförmige Vertiefung 22 gebildet. Bei einer einzigen schraubenförmigen Rippe 19 ist die nutförmige Vertiefung 22 schraubenförmig und durch die Ganghöhe der schraubenförmigen Rippe 19 gebildet, wobei die Ganghöhe vom Radius bzw. Durchmesser des Kerns 17 und der Steigung der schraubenförmigen Rippe 19 abhängt. Vorzugsweise sind die Ganghöhe und/oder Steigung einer schraubenförmigen Rippe 19 konstant.

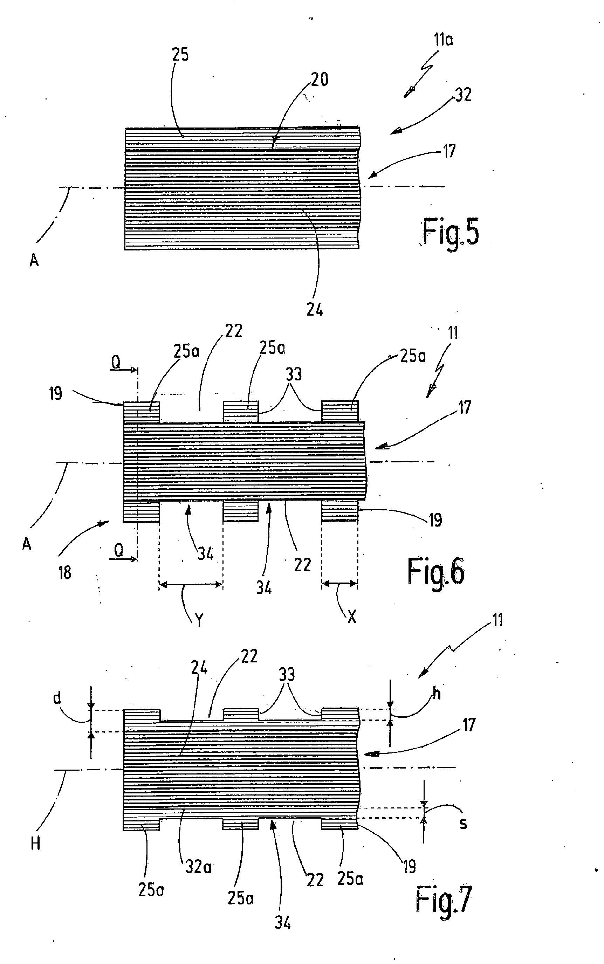

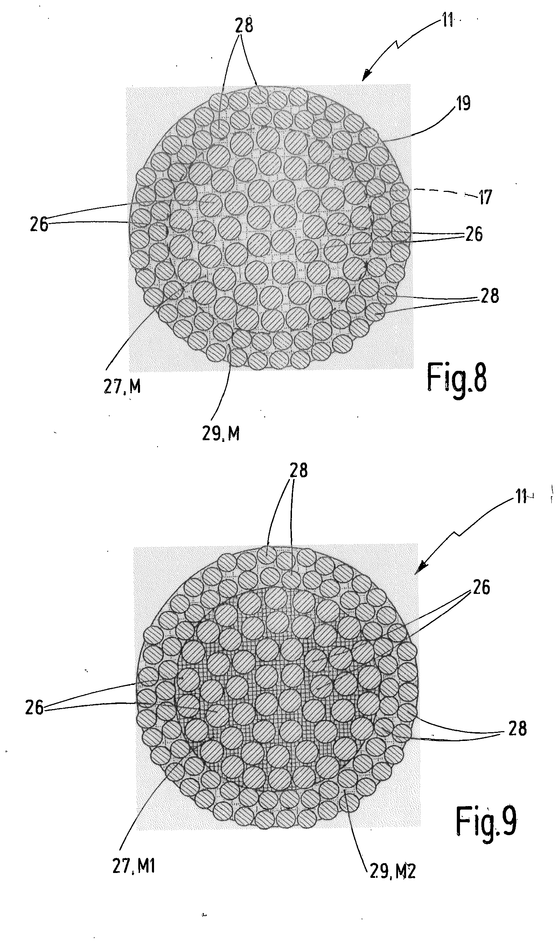

In den Figuren 8 und 9 ist jeweils ein Querschnitt durch einen Bewehrungsstab 11 veranschaulicht. Der Querschnitt erstreckt sich durch den Kern 17 sowie eine beispielsgemäß ringförmige Rippe 19 gemäß Schnittlinie Q-Q in Figur 6. Wie es in den Figuren 8 und 9 zu erkennen ist, besteht der Kern 17 aus wenigstens einem ersten Faserstrang 24 mit ersten Fasern 26, die in ein Matrixmaterial M einer Kernmatrix 27 eingebettet sind. Der wenigstens eine erste Faserstrang 24 ist ein Endlosfaserstrang, beispielsweise ein Roving. Die ersten Fasern 26 bestehen beim Ausführungsbeispiel aus Karbon oder AR-Glas. Als Matrixmaterial M für die Kernmatrix 27 kann beispielsweise Epoxidharz, Vinylester, Polyurethan, Polyethylen, Polystyrol, ein Polysiloxan oder Acrylat verwendet werden.

Die Rippenstruktur weist wenigstens eine Rippe 19 und wenigstens eine Vertiefung 22 auf. Die wenigstens eine Rippe 19 besteht aus wenigstens einem zweiten Faserstrang 25 aus zweiten Fasern 28, der in mehrere Faserstrangabschnitte 25a unterteilt oder aufgetrennt wurde. Die zweiten Faserstrangabschnitte 25a sind in ein Matrixmaterial M einer Rippenmatrix 29 eingebettet sind. Das Matrixmaterial M der Rippenmatrix 29 ist beim Ausführungsbeispiel gemäß Figur 8 dasselbe wie das Matrixmaterial M für die Kernmatrix 27.

Das Fasermaterial der zweiten Fasern 28 unterscheidet sich vom Fasermaterial der ersten Fasern 26. Das Fasermaterial für die zweiten Fasern 28 kann zum Beispiel E-Glas, ECR-Glas, AR-Glas, Basalt oder Polypropylen sein.

Bei allen Ausführungsbeispielen ist der Bewehrungsstab 11 oder der Bewehrungskörper 10 aus wenigstens einem Bewehrungsstab 11 frei von metallischen Materialien.

Bei dem abgewandelten Ausführungsbeispiel gemäß Figur 9 besteht die Kernmatrix 27 aus einem ersten Matrixmaterial M1 und die Rippenmatrix 29 aus einem zweiten Matrixmaterial M2, das verschieden ist vom ersten Matrixmaterial M1.

Der wenigstens eine erste Faserstrang 24 erstreckt sich in Axialrichtung entlang der Längsmittelachse A. An den Stellen, an denen der Bewehrungsstab 11 eine Biegung oder einen Knick aufweist, haben einzelne erste Fasern 26 unterschiedliche Biege- bzw. Krümmungsradien. Zumindest in den Abschnitten, in denen der Bewehrungsstab 11 geradlinig ist, können die ersten Fasern 26 im Wesentlichen in Axialrichtung ausgerichtet sein, wobei technisch nicht vermeidbare Biegungen oder Ondulationen der ersten Fasern 26 auftreten können. Je besser die Streckung der ersten Fasern 26 bzw. des wenigstens einen ersten Faserstrangs 24 ist, desto besser ist die Aufnahmefähigkeit von Zugkräften.

Die Belastbarkeit des Bewehrungsstabes 11 ist durch den Kern 17 definiert. Die Rippenstruktur 18 mit den in die Rippenmatrix 29 eingebetteten Faserstrangabschnitten 25a des zweiten Faserstrangs 25 trägt nicht zur Vergrößerung der Zugbelastbarkeit des Bewehrungsstabes 11 bei. Vielmehr ist die Rippenstruktur 18 dazu eingerichtet, den Bewehrungsstab 11 in der Baustoffmatrix B des Baustoffkörpers 13 zu verankern. Deswegen ist die Rippenstruktur 18 hauptsächlich dazu eingerichtet, Schubspannungen aufzunehmen.

Dadurch, dass in der Rippenstruktur 18 wenigstens eine nutförmige Vertiefung 22 ausgebildet ist, hat die wenigstens eine Rippe 19 in Richtung parallel zur Längsmittelachse A eine Rippenbreite x, die um Größenordnungen kleiner ist als die Länge des Kerns 17 entlang der Längsmittelachse A. Eine Vertiefungsbreite y entspricht dem minimalen Abstand zwischen zwei in Axialrichtung unmittelbar benachbarten Rippen 19 oder Rippenabschnitten bzw. Rippenteilen einer schraubenförmigen Rippe 19.

Bei einer Ausführungsform, insbesondere einer Ausführungsform bei der die wenigstens eine Vertiefung 22 durch Materialabtrag erzeugt wird, kann die Rippenbreite x beispielsweise mindestens 1 mm oder 2 mm oder 5 mm betragen (Figur 6). Die Vertiefungsbreite y kann beispielsweise 0,5-10 mm betragen und insbesondere 1-6 mm betragen.

Bei einem nicht erfindungsgemäßen Beispiel, bei der die wenigstens eine Rippe 19 durch Materialauftrag auf den Kern 17 erzeugt wird, sind die Abmessungen typischerweise deutlich anders: Die Vertiefungsbreite y kann beispielsweise mindestens 1 mm oder 2 mm oder 5 mm betragen (Figur 6). Die Rippenbreite x kann beispielsweise 0,5-10 mm betragen und insbesondere 1-6 mm betragen.

Bei den dargestellten bevorzugten Ausführungsbeispielen erstreckt sich der wenigstens eine zweite Faserstrang 25 im Wesentlichen parallel zum ersten Faserstrang 24. An jeder Stelle in Umfangsrichtung um die Längsmittelachse A fluchten die durch eine Vertiefung 22 unmittelbar benachbarten Faserstrangabschnitte 25a zumindest im Wesentlichen. Für die zweiten Fasern 28 der Faserstrangabschnitte 25a gilt analog zu den ersten Fasern 26, dass sie abgesehen von technisch erforderlichen Ondulationen möglichst gestreckt verlaufen. An Biege- oder Knickstellen des Bewehrungsstabes 11 können die zweiten Fasern 28 von der Parallelität zur Längsmittelachse A abweichen, da an einer solchen Biege- bzw. Knickstelle des Bewehrungsstabes 11 radial innen und radial außen unterschiedliche Biegeradien des Bewehrungsstabes 11 auftreten.

Wie es in den Figuren 6 und 7 veranschaulicht ist, ist die Rippenbreite x klein verglichen mit der Länge des Kerns 17 und/oder der Länge des wenigstens einen ersten Faserstrangs 24 im Kern 17. Dadurch können für die ersten Fasern 26 und die zweiten Fasern 28 unterschiedliche Fasermaterialien verwendet werden, die deutlich voneinander abweichende Wärmeausdehnungskoeffizienten aufweisen. Beispielsweise kann eine Kombination von ersten Fasern 26 aus Karbon und zweiten Fasern 28 aus Glas verwendet werden. Die unterschiedliche Längenänderung der zweiten Fasern 28 verglichen mit den ersten Fasern 26 hat keinen bzw. lediglich einen unerheblichen Einfluss auf den Bewehrungsstab 11. Eigenspannungen, die die Zugfestigkeit des Bewehrungsstabes 11 bzw. des Bewehrungskörpers 10 beeinträchtigen können, lassen sich dadurch zumindest vermindern.

Anhand der Darstellungen in den Figuren 5-7 ist ein bevorzugtes Verfahren zur Herstellung des Bewehrungskörpers 10 mit wenigstens einem Bewehrungsstab 11 veranschaulicht. Zunächst wird ein Bewehrungsstabrohling 11a hergestellt, der sozusagen ein Zwischenprodukt während des Herstellungsverfahrens bildet. Der Bewehrungsstabrohling 11a kann beispielsweise durch ein Pultrusionsverfahren hergestellt werden und weist den Kern 17 mit dem wenigstens einen in die Kernmatrix 27 eingebetteten ersten Faserstrang 24, sowie eine Mantelschicht 32 auf, die unmittelbar an der Umfangsfläche 20 des Kerns 17 angeordnet ist und die die Umfangsfläche 20 beispielsgemäß vollständig abdeckt. Die Mantelschicht 32 hat beim Ausführungsbeispiel eine hohlzylindrische Gestalt.

Die Mantelschicht 32 ist durch ein Matrixmaterial gebildet, in das die zweiten Fasern 28 eingebettet sind. Der wenigstens eine zweite Faserstrang 25 erstreckt sich in der Mantelschicht 32 parallel zum ersten wenigstens einen ersten Faserstrang 24 im Kern 17. Das Matrixmaterial der Mantelschicht 32 entspricht dem Matrixmaterial der Rippenmatrix 29. Die Mantelschicht 32 bildet die Basis zur Herstellung der Rippenstruktur 18. Eine Schichtdicke d der Mantelschicht 32 gibt die maximale Höhe h einer herzustellenden Rippe 19 radial oder rechtwinklig zur Längsmittelachse A vor (Fig. 5).

Zur Erzeugung der Rippenstruktur 28 mit der wenigstens einen Rippe 19 wird wenigstens eine nutförmige Vertiefung 22 in die Mantelschicht 32 eingebracht (Figuren 6 und 7). Die Vertiefung 22 ist auf der dem Kern 17 entgegengesetzten Seite hin offen. In Richtung parallel zur Längsmittelachse A ist die wenigstens eine Vertiefung 22 durch zwei sich gegenüberliegende Seitenwände 33 begrenzt. Die Seitenwände 33 stellen sozusagen sich gegenüberliegende Nutflanken dar. Die beiden Seitenwände 33 sind mittels eines Bodens 34 der Vertiefung 22 miteinander verbunden. Der Boden 34 bildet den Nutgrund. Der Boden 34 kann durch einen Abschnitt der Umfangsfläche 20 des Kerns 17 gebildet sein (Figuren 1-4 und 6).

Alternativ kann an der Umfangsfläche 20 eine Lage 32a oder ein Abschnitt der Mantelschicht 32 verbleiben, so dass der Boden 34 durch die Lage 32a gebildet ist (Fig. 7). Die Dicke s der Lage 32a beträgt vorzugsweise maximal 50% der Schichtdicke d der Mantelschicht 32 oder der Höhe h der wenigstens einen Rippe 19.

Die in die Mantelschicht 32 des Bewehrungsstabrohling 11a eingebrachte wenigstens eine Vertiefung 22 ist bei den bevorzugten Ausführungsbeispielen vollständig außerhalb des Kerns 17 angeordnet und kann die Mantelschicht 32 teilweise (Fig. 7) oder vollständig (Fig. 6) durchsetzen. Abhängig davon ist der Boden 34 durch einen Abschnitt der Umfangsfläche 20 (Fig. 6) oder durch nicht abgetragenes Material der Mantelschicht 32 gebildet (Fig. 7). Die maximale Tiefe der eingebrachten wenigstens einen Vertiefung 22 ist gleich der Schichtdicke d der Mantelschicht 32. Dadurch ist sichergestellt, dass beim Einbringen der wenigstens einen Vertiefung 22 die ersten Fasern 26 im Kern 17 unbeschädigt bleiben und die durch den Bewehrungsstab 11 bereitgestellte maximale Zugbelastung beim Ausbilden der Rippenstruktur 18 nicht nachteilig beeinträchtigt wird.

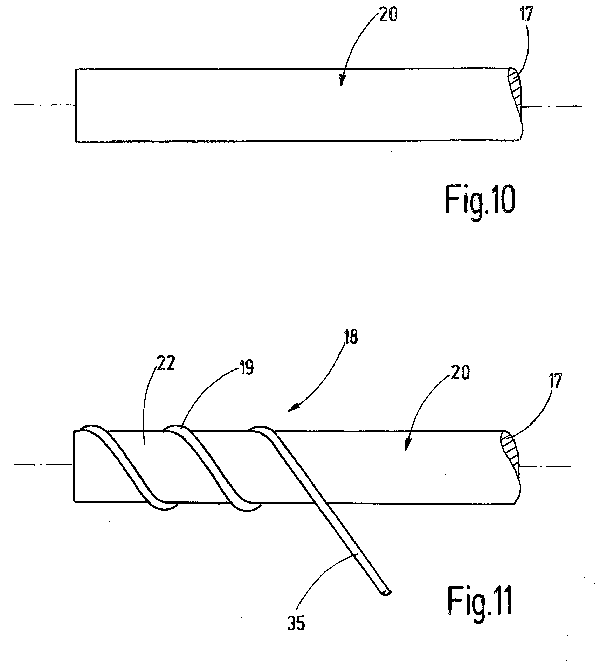

In den Figuren 10 und 11 ist ein alternatives Herstellungsverfahren zur Herstellung eines Bewehrungsstabes 11 veranschaulicht. Dabei wird zunächst der Kern 17 hergestellt, beispielsweise durch ein Pultrusionsverfahren. Im Anschluss daran kann wenigstens ein Faserstrang 35 mit in einem Matrixmaterial eingebetteten zweiten Fasern 28 auf die Umfangsfläche 20 aufgebracht und dort befestigt werden, insbesondere durch eine stoffschlüssige Verbindung, beispielsweise durch Aushärten des Matrixmaterials des Faserstrangs 35 und/oder des Kerns 17. In Figur 11 ist schematisch die Herstellung eines Bewehrungsstabs 11 mit einer einzigen schraubenförmigen Rippe 19 veranschaulicht. In Abwandlung hierzu können auch Bewehrungsstäbe 11 mit mehreren Rippen 19 hergestellt werden, indem mehrere Faserstränge 35 entsprechend ringförmig und/oder schraubenförmig um den Kern 17 gewickelt werden.

Die Erfindung betrifft einen Bewehrungskörper 10 und ein Verfahren zu dessen Herstellung. Der Bewehrungskörper 10 hat wenigstens einen Bewehrungsstab 11. Jeder Bewehrungsstab 11 hat einen Kern 17 mit einer Umfangsfläche 20, an der eine Rippenstruktur 18 mit wenigstens einer Rippe 19 und wenigstens einer Vertiefung 22 angeordnet ist. Der Kern 17 ist durch wenigstens einen in eine Kernmatrix 27 eingebetteten ersten Faserstrang 24 gebildet. Zur Bildung der wenigstens eine Rippe 19 ist wenigstens ein zweiter Faserstrang 25 in eine Rippenmatrix 29 eingebettet, wobei der wenigstens eine zweite Faserstrang 25 und die Rippenmatrix 29 durch die wenigstens eine Vertiefung 22 parallel zu einer Längsmittelachse A des Bewehrungsstabes 11 getrennt sind, so dass der wenigstens eine zweite Faserstrang 25 in Faserstrangabschnitte 25a getrennt ist. Der wenigstens eine erste und der wenigstens eine zweite Faserstrang 24, 25 haben Fasern 26 bzw. 28 aus unterschiedlichen Materialien.

### Bezugszeichenliste:

- 10: Bewehrungskörper
- 11: Bewehrungsstab
- 11a: Bewehrungsstabrohling
- 12: Bewehrungsgitter
- 13: Baustoffkörper

- 17: Kern
- 18: Rippenstruktur
- 19: Rippe
- 20: Umfangsfläche des Kerns
- 21: Rippenaußenfläche
- 22: Vertiefung

- 24: erster Faserstrang
- 25: zweiter Faserstrang
- 25a: Faserstrangabschnitt des zweiten Faserstrangs
- 26: erste Fasern
- 27: Kernmatrix
- 28: zweite Fasern
- 29: Rippenmatrix

- 32: Mantelschicht
- 32a: Lage der Mantelschicht
- 33: Seitenwand
- 34: Boden
- 35: Faserstrang

- A: Längsmittelachse
- B: Baustoffmatrix
- d: Schichtdicke der Mantelschicht
- h: Höhe der Rippe
- M: Matrixmaterial
- M1: erstes Matrixmaterial
- M2: zweites Matrixmaterial
- s: Dicke der Lage
- U: Umfangsrichtung
- x: Rippenbreite
- y: Vertiefungsbreite

## Patentansprüche

1. Bewehrungskörper (10)
mit wenigstens einem sich in einer Axialrichtung entlang einer Längsmittelachse (A) erstreckenden Bewehrungsstab (11), der einen Kern (17) und eine an einer Umfangsfläche (20) des Kerns (17) angeordnete Rippenstruktur (18) mit mehreren sich ringförmig in Umfangsrichtung um die Längsmittelachse (A) erstreckenden und in Axialrichtung beabstandeten Rippen (19), wobei sich wenigstens eine Vertiefung (22) ringförmig in Umfangsrichtung um die Längsmittelachse (A) erstreckt, oder mit wenigstens einer sich schraubenförmig um die Längsmittelachse (A) erstreckenden Rippe (19) und wenigstens einer sich schraubenförmig um die Längsmittelachse (A) erstreckenden Vertiefung (22),
wobei jede Rippe (19) in der Axialrichtung bzw. parallel zur Längsmittelachse des Bewehrungsstabes eine Rippenbreite (x) von mindestens 1 mm hat und/oder eine maximale Rippenbreite (x) von 20 mm aufweist,
wobei der Kern (17) aus wenigstens einem in eine Kernmatrix (27) eingebetteten ersten Faserstrang (14) aus ersten Fasern (26) besteht, wobei die wenigstens eine Rippe (19) aus wenigstens einem in eine Rippenmatrix (29) eingebetteten zweiten Faserstrang (25) aus zweiten Fasern (28) besteht, wobei der zweite Faserstrang (25) in mehrere Faserstrangabschnitte (25a) unterteilt ist,
wobei in Axialrichtung unmittelbar benachbarte Faserstrangabschnitte (25a) des zweiten Faserstrangs (25) durch die wenigstens eine Vertiefung (22) voneinander getrennt sind und jeder Faserstrangabschnitt (25a) in einer Rippe (19) oder einem Rippenteil der wenigstens einen Rippe (19) angeordnet ist,
wobei sich die Faserstrangabschnitte (25a) des zweiten Faserstrangs (25) zumindest in geradlinig verlaufenden Abschnitten des Bewehrungsstabs (11) in Axialrichtung erstrecken,
und wobei die zweiten Fasern (28) des wenigstens einen zweiten Faserstrangs (25) aus einem sich vom Fasermaterial der ersten Fasern (26) unterscheidenden Fasermaterial sind.

2. Bewehrungskörper nach Anspruch 1,
**dadurch gekennzeichnet, dass** die ersten Fasern (26) des ersten Faserstrangs (24) zumindest in geradlinig verlaufenden Abschnitten des Bewehrungsstabs (11) im Wesentlichen parallel zu einer Längsmittelachse (A) des Bewehrungsstabs (11) ausgerichtet sind.

3. Bewehrungskörper nach Anspruch 1 oder 2,
**dadurch gekennzeichnet, dass** die zweiten Fasern (28) de Faserstrangabschnitte (25a) des zweiten Faserstrangs (25) zumindest in geradlinig verlaufenden Abschnitten des Bewehrungsstabs (11) im Wesentlichen parallel zu einer Längsmittelachse (A) des Bewehrungsstabs (11) ausgerichtet sind.

4. Bewehrungskörper nach einem der vorhergehenden Ansprüche,
**dadurch gekennzeichnet, dass** das Fasermaterial der ersten Fasern (26) eine höhere Zugfestigkeit aufweist als das Fasermaterial der zweiten Fasern (28) und/oder dass die zweiten Fasern (28) kostengünstiger sind als die ersten Fasern (26).

5. Bewehrungskörper nach einem der vorhergehenden Ansprüche,
**dadurch gekennzeichnet, dass** die ersten Fasern (26) Karbon oder AR-Glas enthalten oder aus Karbon bestehen oder aus AR-Glas bestehen.

6. Bewehrungskörper nach einem der vorhergehenden Ansprüche,
**dadurch gekennzeichnet, dass** die zweiten Fasern (28) Glas oder Polymermaterial enthalten oder aus Glas bestehen oder aus Polymermaterial bestehen.

7. Bewehrungskörper nach einem der vorhergehenden Ansprüche,
**dadurch gekennzeichnet, dass** die Kernmatrix (27) des Bewehrungsstabs (11) aus einem einheitlichen Matrixmaterial (M, M1) besteht und/oder dass die Rippenmatrix (29) der wenigstens einen Rippe (19) aus einem einheitlichen Matrixmaterial (M, M2) besteht.

8. Bewehrungskörper nach Anspruch 7,
**dadurch gekennzeichnet, dass** die Kernmatrix (27) des Bewehrungsstabs (11) und die die Rippenmatrix (29) der wenigstens einen Rippe (19) aus dem gleichen Matrixmaterial (M) bestehen.

9. Verfahren zur Herstellung eines Bewehrungskörpers (10) mit folgenden Schritten:
- Herstellen eines Bewehrungsstabrohlings (11a), der einen Kern (17) und eine Umfangsfläche (20) des Kerns (17) umschließende Mantelschicht (32) aufweist, wobei der Kern (17) aus in eine Kernmatrix (27) eingebetteten ersten Fasern (26) aus einem Fasermaterial besteht, und wobei die Mantelschicht (32) aus in eine Matrix der Mantelschicht (32) eingebetteten zweiten Fasern (28) aus einem anderen Fasermaterial besteht,
- Einbringen von wenigstens einer Vertiefung (22) in die Mantelschicht (32) des Bewehrungsstabrohlings (11a) zur Erzeugung einer Rippenstruktur (18) mit wenigstens einer Rippe (19) und wenigstens einer Vertiefung (22), um einen Bewehrungsstabs (11) zu erhalten, so dass mehrere sich ringförmig in Umfangsrichtung um die Längsmittelachse (A) und in Axialrichtung beabstandete Rippen (19) und wenigstens eine ringförmig in Umfangsrichtung um die Längsmittelachse (A) erstreckende Vertiefung (22) entstehen, oder dass wenigstens eine sich schraubenförmig um die Längsmittelachse (A) erstreckende Rippe (19) und wenigstens eine sich schraubenförmig um die Längsmittelachse (A) erstreckenden Vertiefung (22) entstehen, wobei jede Rippe (19) in der Axialrichtung bzw. parallel zur Längsmittelachse des Bewehrungsstabes eine Rippenbreite (x) von mindestens 1 mm hat und/oder eine maximale Rippenbreite (x) von 20 mm aufweist,
- Verwenden wenigstens eines Bewehrungsstabes (11) zur Herstellung des Bewehrungskörpers (10).

10. Verfahren nach Anspruch 9,
**dadurch gekennzeichnet, dass** die wenigstens eine Vertiefung (22) die Form einer Nut aufweist.

11. Verfahren nach Anspruch 9 oder 10,
**dadurch gekennzeichnet, dass** die wenigstens eine Vertiefung (22) vollständig außerhalb des Kerns (17) angeordnet ist.

12. Verfahren nach Anspruch 11,
**dadurch gekennzeichnet, dass** sich zumindest eine von der wenigstens einen Vertiefung (22) bis zur Umfangsfläche (20) des Kerns (17) erstreckt.

13. Verfahren nach Anspruch 11,
**dadurch gekennzeichnet, dass** an der Umfangsfläche (20) eine Lage (32a) oder ein Abschnitt der Mantelschicht (32) verbleibt, so dass ein Boden (34) der Vertiefung (22) durch die Lage (32a) oder den Abschnitt gebildet ist.

14. Verfahren nach Anspruch 13,
**dadurch gekennzeichnet, dass** eine Dicke (s) der Lage (32a) maximal 50% einer Schichtdicke (d) der Mantelschicht (32) oder einer Höhe (h) der wenigstens einen Rippe (19) beträgt.

## Claims

1. Reinforcing body (10)
having at least one reinforcing bar (11) extending in an axial direction along a longitudinal center axis (A), the reinforcing bar (11) having a core (17) and a rib structure (18) arranged at a peripheral surface (20) of the core (17) , which has multiple ribs (19) extending around the longitudinal center axis (A) in a ring-shaped manner and being distanced from one another in axial direction, wherein at least one depression (22) extends around the longitudinal center axis (A) in a ring-shaped manner, or which has at least one rib (19) extending helically around the longitudinal center axis (A) and at least one depression (22) extending helically around the longitudinal center axis (A),
wherein in axial direction or parallel or parallel to the longitudinal center axis (A) of the reinforcing bar each rib (19) has a rib width (x) of at least 1 mm and/or has a maximum rib width (x) of 20 mm,
wherein the core (17) consists of at least one fiber strand (14) of first fibers (26) embedded in a core matrix (27), wherein the at least one rib (19) consists of at least one second fiber strand (25) of second fibers (28) embedded in a rib matrix (29), wherein the second fiber strand (25) is divided into a plurality of fiber strand sections (25a),
wherein fiber strand sections (25a) of the second fiber strand (25) that are directly adjacent in axial direction are separated from each other by the at least one depression (22) and each fiber strand section (25a) is arranged in a rib (19) or a rib portion of the at least one rib (19),
wherein the fiber strand sections (25a) of the second fiber strand (25) extend in axial direction at least in straight extending sections of the reinforcing bar (11),
and wherein the second fibers (28) of the at least one second fiber strand (25) are made of a fiber material that is different from the fiber material of the first fibers (26).

2. Reinforcing body according to claim 1,
**characterized in that** the first fibers (26) of the first fiber strand (24) are orientated mainly parallel to the longitudinal center axis (A) of the reinforcing bar (11) at least in straight extending sections of the reinforcing bar (11).

3. Reinforcing body according to claim 1 or 2,
**characterized in that** the second fibers (28) of the fiber strand sections (25a) of the second fiber strand (25) are orientated mainly parallel to the longitudinal center axis (A) of the reinforcing bar (11) at least in straight extending sections of the reinforcing bar (11).

4. Reinforcing body according to any of the preceding claims,
**characterized in that** the fiber material of the first fibers (26) has a higher tensile strength than the fiber material of the second fibers (28) and/or that the second fibers (28) are cheaper than the first fibers (26).

5. Reinforcing body according to any of the preceding claims,
**characterized in that** the first fibers (26) contain carbon or AR-glass or consist of carbon or AR-glass.

6. Reinforcing body according to any of the preceding claims,
**characterized in that** the second fibers (28) comprise glass or polymer material or consist of glass or polymer material.

7. Reinforcing body according to any of the preceding claims,
**characterized in that** the core matrix (27) of the reinforcing bar (11) consists of a uniform matrix material (M, M1) and/or the rib matrix (29) of the at least one rib (19) consists of a uniform matrix material (M, M2).

8. Reinforcing body according to claim 7,
**characterized in that** the core matrix (27) of the reinforcing bar (11) and the rib matrix (29) of the at least one rib (19) consists of the same matrix material (M).

9. Method for manufacturing a reinforcing body (10) comprising the following steps:
- Manufacturing of a reinforcing bar blank (11a) comprising a core (17) and a coating layer (32) surrounding a peripheral surface (20) of the core (17), wherein the core (17) comprises first fibers (26) of a fiber material embedded in a core matrix (27), and wherein the coating layer (32) comprises second fibers (28) of a different fiber material embedded in a matrix of the coating layer (32),
- Introducing at least one depression (22) in the coating layer (32) of the reinforcing bar blank (11a) for creating a rib structure (18) with at least one rib (19) and at least one depression (22), in order to obtain a reinforcing bar (11), so that multiple ribs (19) extending around the longitudinal center axis (A) in a ring-shaped manner and being distanced from one another in axial direction and at least one depression (22) extending around the longitudinal center axis (A) in a ring-shaped manner are created or that at least one rib (19) extending helically around the longitudinal center axis (A) and at least one depression (22) extending helically around the longitudinal center axis (A) are created, wherein in axial direction or parallel or parallel to the longitudinal center axis (A) of the reinforcing bar each rib (19) has a rib width (x) of at least 1 mm and/or has a maximum rib width (x) of 20 mm,
- Using the at least one reinforcing bar (11) for manufacturing the reinforcing body (10).

10. Method according to any of the claims 9,
**characterized in that** the at least one depression (22) has the shape of a groove.

11. Method according to any of the claims 9 or 10,
**characterized in that** the at least one depression (22) is arranged entirely outside of the core (17).

12. Method according to claim 11,
**characterized in that** at least one of the at least one depression (22) extends to the peripheral surface (20) of the core (17).

13. Method according to claim 11,
**characterized in that** on the peripheral surface (20) a layer (32a) or a section of the coating layer (32) remains, so that a bottom (34) of the depression (22) is formed by the layer (32a) or the section.

14. Method according to claim 13,
**characterized in that** a thickness (s) of the layer (32a) is at most 50% of the layer thickness (d) of the coating layer (32) or of a height (h) of the at least one rib (19).

## Revendications

1. Corps d'armature (10)
comprenant au moins une barre d'armature (11) qui s'étend dans la direction axiale, le long d'un axe médian longitudinal (A), et qui un coeur (17) et une structure de nervure (18) disposée sur une surface périphérique (20) du coeur (17) et comportant plusieurs nervures (19) s'étendant sous une forme annulaire dans la direction périphérique autour de l'axe médian longitudinal (A) et espacées dans la direction axiale, au moins un creux (22) s'étendant sous une forme annulaire dans la direction périphérique autour de l'axe médian longitudinal (A), ou comportant au moins une nervure (19) s'étendant sous une forme hélicoïdale autour de l'axe médian longitudinal (A) et au moins un creux (22) s'étendant sous une forme hélicoïdale autour de l'axe médian longitudinal (A),
chaque nervure (19) présentant, dans la direction axiale ou parallèlement à l'axe médian longitudinal de la barre d'armature, une largeur de nervure (x) d'au moins 1 mm et/ou présentant une largeur de nervure (x) maximale de 20 mm,
le coeur (17) étant constitué d'au moins un premier faisceau de fibres (14) formé de premières fibres (26) et noyé dans une matrice de coeur (27), la nervure (19), au nombre d'au moins une, étant constituée d'au moins un deuxième faisceau de fibres (25) formé de deuxièmes fibres (28) et noyé dans une matrice de nervure (29), le deuxième faisceau de fibres (25) étant divisé en plusieurs tronçons de faisceau de fibres (25a),
des tronçons de faisceau de fibre (25a) du deuxième faisceau de fibres (25), qui sont directement adjacents dans la direction axiale, étant séparés les uns des autres par le creux (22), au nombre d'au moins un, et chaque tronçon de faisceau de fibres (25a) étant disposé dans une nervure (19) ou une partie de nervure de la nervure (19), au nombre d'au moins une,
les tronçons de faisceau de fibres (25a) du deuxième faisceau de fibres (25) s'étendant dans la direction axiale, au moins dans des tronçons rectilignes de la barre d'armature (11),
et les deuxièmes fibres (28) du deuxième faisceau de fibres (25), au nombre d'au moins un, étant constituées d'un matériau de fibre qui est différent du matériau de fibre des premières fibres (26).

2. Corps d'armature selon la revendication 1, **caractérisé en ce que** les premières fibres (26) du premier faisceau de fibres (24) sont orientées sensiblement parallèlement à un axe médian longitudinal (A) de la barre d'armature (11), au moins dans des tronçons rectilignes de la barre d'armature (11).

3. Corps d'armature selon la revendication 1 ou 2, **caractérisé en ce que** les deuxièmes fibres (28) des tronçons de faisceau de fibres (25a) du deuxième faisceau de fibres (25) sont orientées sensiblement parallèlement à un axe médian longitudinal (A) de la barre d'armature (11), au moins dans des tronçons rectilignes de la barre d'armature (11).

4. Corps d'armature selon l'une des revendications précédentes, **caractérisé en ce que** le matériau de fibre des premières fibres (26) présente une résistance à la traction plus élevée que le matériau de fibre des deuxièmes fibres (28) et/ou **en ce que** les deuxièmes fibres (28) sont d'un prix plus avantageux que les premières fibres (26).

5. Corps d'armature selon l'une des revendications précédentes, **caractérisé en ce que** les premières fibres (26) contiennent du carbone ou du verre AR ou sont constituées de carbone ou de verre AR.

6. Corps d'armature selon l'une des revendications précédentes, **caractérisé en ce que** les deuxièmes fibres (28) contiennent du verre ou un matériau polymère ou sont constituées de verre ou d'un matériau polymère.

7. Corps d'armature selon l'une des revendications précédentes, **caractérisé en ce que** la matrice de coeur (27) de la barre d'armature (11) est constituée d'un matériau de matrice (M, M1) uniforme et/ou **en ce que** la matrice de nervure (29) de la nervure (19), au nombre d'au moins une, est constituée d'un matériau de matrice (M, M2) uniforme.

8. Corps d'armature selon la revendication 7, **caractérisé en ce que** la matrice de coeur (27) de la barre d'armature (11) et la matrice de nervure (29) de la nervure (19), au nombre d'au moins une, sont constituées du même matériau de matrice (M).

9. Procédé de fabrication d'un corps d'armature (10) comprenant les étapes suivantes :
- fabrication d'une ébauche de barre d'armature (11a) qui présente un coeur (17) et une couche d'enveloppe (32) entourant la surface périphérique (20) du coeur (17), le coeur (17) étant constitué de premières fibres (26) en un matériau de fibre, qui sont noyées dans une matrice de coeur (27), et la couche d'enveloppe (32) étant constituée de deuxièmes fibres (28) en un autre matériau de fibre, qui sont noyées dans une matrice de la couche d'enveloppe (32),
- réalisation d'au moins un creux (22) dans la couche d'enveloppe (32) de l'ébauche de barre d'armature (11a) pour créer une structure de nervure (18) avec au moins une nervure (19) et au moins un creux (22), aux fins d'obtenir une barre d'armature (11), de manière à créer plusieurs nervures (19), s'étendant sous une forme annulaire dans la direction périphérique autour de l'axe médian longitudinal (A) et espacées dans la direction axiale, et au moins un creux (22), s'étendant sous une forme annulaire dans la direction périphérique autour de l'axe médian longitudinal (A), ou de manière à créer au moins une nervure (19), s'étendant sous une forme hélicoïdale autour de l'axe médian longitudinal (A), et au moins un creux (22), s'étendant sous une forme hélicoïdale autour de l'axe médian longitudinal (A), chaque nervure (19) présentant, dans la direction axiale ou parallèlement à l'axe médian longitudinal de la barre d'armature, une largeur de nervure (x) d'au moins 1 mm et/ou une largeur de nervure (x) maximale de 20 mm,
- utilisation d'au moins une barre d'armature (11) pour la fabrication du corps d'armature (10).

10. Procédé selon la revendication 9, **caractérisé en ce que** le creux (22), au nombre d'au moins un, présente la forme d'une rainure.

11. Procédé selon la revendication 9 ou 10, **caractérisé en ce que** le creux (22), au nombre d'au moins un, est disposé complètement à l'extérieur du coeur (17).

12. Procédé selon la revendication 11, **caractérisé en ce qu'**au moins un des creux (22), au nombre d'au moins un, s'étend jusqu'à la surface périphérique (20) du coeur (17).

13. Procédé selon la revendication 11, **caractérisé en ce qu'**une couche (32a) ou une partie de la couche d'enveloppe (32) subsiste sur la surface périphérique (20), de sorte qu'un fond (34) du creux (22) est formé par la couche (32a) ou la partie.

14. Procédé selon la revendication 13, **caractérisé en ce qu'**une épaisseur (s) de la couche (32a) correspond au maximum à 50 % d'une épaisseur de couche (d) de la couche d'enveloppe (32) ou d'une hauteur (h) de la nervure (19), au nombre d'au moins une.
